# FASCICULE DE BREVET EUROPEEN

(11) **EP 0 925 010 B1**
(45) Date de publication et mention de la délivrance du brevet: **29.09.2004**
(21) Numéro de dépôt: 98937608.2
(22) Date de dépôt: 10.07.1998
(51) Int. Cl.: A47J 43/08, A47J 43/07

(54) **MIXER PLONGEANT**
STABMIXER
DIPPING MIXER

(30) Priorité: 16.07.1997 FR 9709012; 29.10.1997 FR 9713551
(43) Date de publication de la demande: 30.06.1999
(73) Titulaire: Robot Coupe SNC, 71300 Montceau-les-Mines (FR)
(72) Inventeur: CALANGE, Yves, F-71300 Gourdon (FR)
(74) Mandataire: Thinat, Michel
(86) Numéro de dépôt international: PCT/FR1998/001500
(87) Numéro de publication internationale: WO 1999/003388

(56) Documents cités:
- BE-A- 629 800
- CH-A- 315 830
- FR-A- 1 467 108
- FR-A- 2 553 278

## Description

La présente invention a pour objet un appareil électroportatif ou mixer plongeant destiné en particulier, mais non exclusivement, à la préparation des aliments.

Un tel appareils est connu du doument BE-A-629800 et comprend un carter, le carter incluant un moteur électrique entraînant en rotation une première extrémité d'un arbre inclus dans un tube fixe fixé sur le carter par une première extrémité, un outil étant lié en rotation à la seconde extrémité de l'arbre par un axe, un embout amovible étant monté sur une seconde extrémité du tube, l'axe traversant l'embout et étant lié de façon amovible à l'arbre. Entraîné à grande vitesse, l'outil est plongé à l'intérieur des aliments à préparer et il les coupe, mélange, émulsionne, etc.

Le problème se posant avec ce type d'appareil est essentiellement un problème d'hygiène. En effet, compte-tenu de la présence d'un moteur électrique, il n'est pas possible de procéder à un nettoyage correct de celui-ci notamment à l'aide d'une machine à laver et, en particulier, il n'est pas possible de stériliser la partie antérieure portant l'outil qui est amenée à entrer en contact avec des préparations successives généralement différentes. Or, l'outil tournant à grande vitesse joue un rôle de pompe aspirante vers le haut. Il en résulte que malgré les précautions qui sont prises au niveau de l'étanchéité, une petite partie des produits liquides mélangés et coupés, remonte à l'intérieur du tube où, bien souvent, ils se putréfient sous l'action des bactéries. L'embout est particulièrement difficile à nettoyer car il présente des zones difficiles d'accès.

La présente invention a pour objet de pallier cet inconvénient et de permettre la réalisation d'un mixer plongeant pouvant être utilisé dans la restauration collective en présentant les qualités nécessaires d'hygiène.

Les objectifs sont obtenus par un mixer plongeant selon les revendications indépendantes 1 et 7.

Il est ainsi possible de démontrer l'embout pour procéder à un nettoyage approfondi voire à une stérilisation. Il est ainsi possible de démonter non seulement l'embout, mais également l'outil pour un nettoyage ou un entretien plus approfondi en particulier du palier se trouvant derrière l'outil.

D'autres caractéristiques préférentielles sont décrites dans les revendications dépendantes.

D'autres caractéristiques et avantages de la présente invention apparaîtront au cours de la description qui va suivre de modes particuliers de réalisation, donnés uniquement à titre d'exemples non limitatifs, en regard des figures qui représentent:
- La figure 1, une vue en perspective d'un mixer selon l'invention ;
- La figure 2, une vue en coupe par un plan vertical de la partie inférieure du tube et de l'embout en position de travail ;
- La figure 3, une vue éclatée de la partie supérieure du tube;
- La figure 4, une vue éclatée de la partie inférieure du mixer;
- La figure 5 une vue de la circulation de l'air de refroidissement à l'intérieur du capot moteur;
- La figure 6, une vue d'une variante de montage de l'outil à l'intérieur de l'embout;
- La figure 7, en coupe la partie inférieure d'un mixer plongeant à embout amovible à pont thermique.

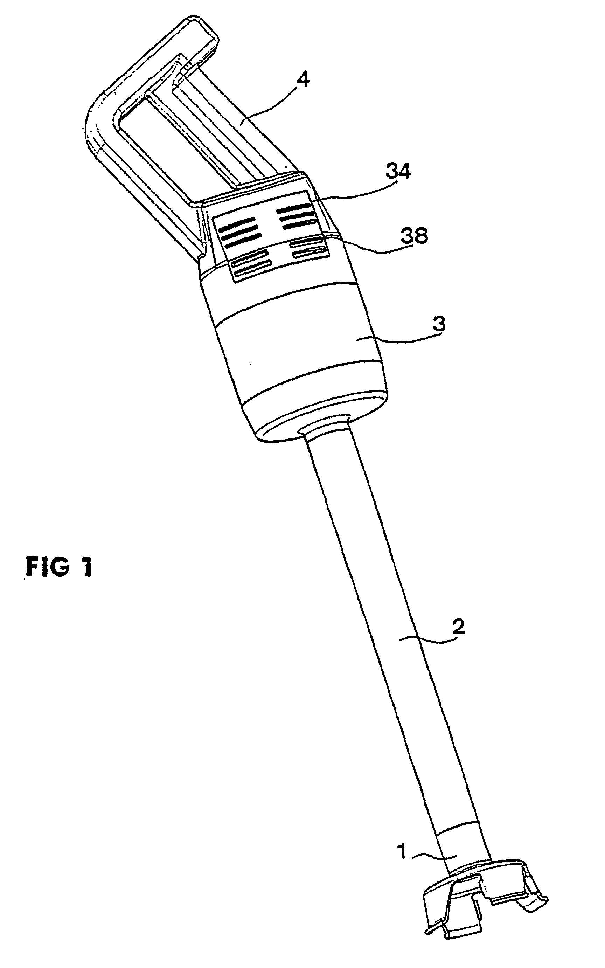

Sur la figure 1, on voit que le mixer comprend du bas vers le haut un embout amovible 1 fixé sur un tube ou manchon 2. Le tube 2 est solidaire du carter 3 et inclût un moteur électrique (non représenté) ainsi que des moyens de connexion électrique avec une source de courant incluant un fusible thermique et une carte de manque de tension. À la partie supérieure du carter 3 est intégrée une poignée 4, ladite poignée 4 pouvant inclure un interrupteur de commande de fonctionnement du moteur. Sur la figure 1, le mixer est représenté en état de fonctionnement.

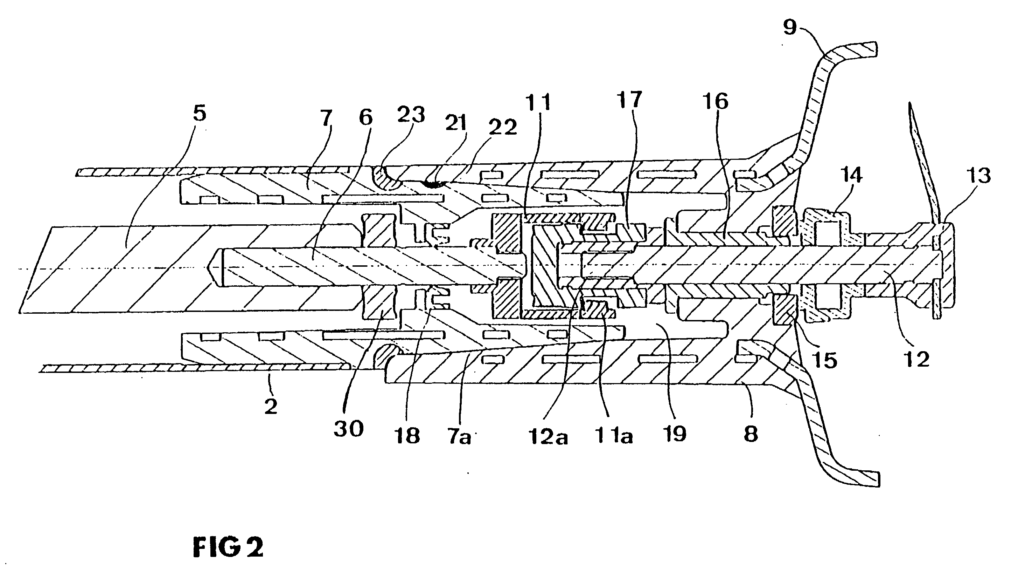

Un premier mode de réalisation est représenté sur les figures 2,3 et 4

La figure 2 représente en coupe la partie avant du mixer comprenant l'extrémité avant du tube 2 à l'intérieur duquel s'étend un arbre d'entraînement 5 dont l'extrémité supérieure (non représentée) est mécaniquement reliée à l'arbre de sortie du moteur. Bien entendu, l'arbre 5 est un arbre longiligne de longueur suffisante pour éloigner le carter 3 de l'outil destiné à travailler notamment dans des préparations fluides généralement à température relativement haute. La poignée comme le carter doivent, bien entendu, rester, dans tous les cas éloignés et, à l'extérieur de la préparation.

Une pièce 7 de raccordement avec l'embout amovible 1 est montée sur l'extrémité inférieure du tube 2. L'avant de la pièce 7 (la partie droite sur la figure) présente une partie 7a d'assemblage avec une pièce 8 dont la face interne 8a correspond à la surface 7a qui, dans l'exemple représenté, est conique. La pièce 8 présente à sa partie supérieure des ergots 21, dont un seul apparaît sur la figure, pouvant s'insérer dans une rainure 22 de la pièce 7 pour former une fermeture à bayonnette. Un joint statique 23 est disposé. entre les pièces 7 et 8. Sur la pièce 8 est solidarisée une garde métallique 9 en forme de cloche qui évite que l'outil 13 puisse toucher le fond ou les parois du récipient et permet le travail de l'outil par réflexion de la matière traitée contre ses parois.

Dans la partie axiale, on distingue un prolongateur 6 solidaire de la partie inférieure de l'arbre 5 et prolongeant celui-ci. Le prolongateur 6 est inséré par sa partie avant dans une pièce d'entraînement vissée sur le prolongateur 6 ,constituant une cage d'entraînement 11 entourant un moyeu d'entraînement 17.

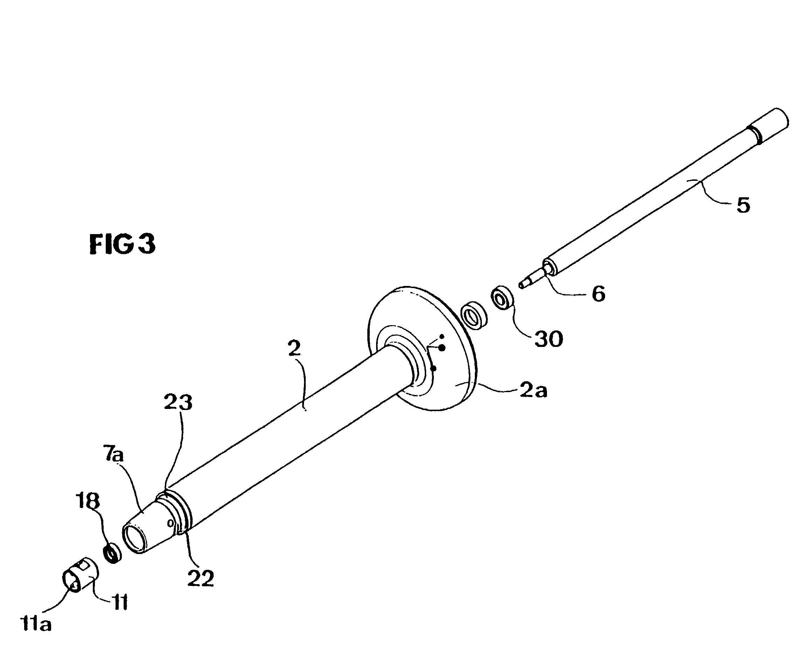

Sur la figure 3, on distingue de la droite vers la gauche, l'arbre d'entraînement 5 et le prolongateur 6, un roulement à billes 30 et une bague 30a, le tube 2 présentant à sa partie supérieure un flasque 2a de montage étanche sur le carter 3 du moteur. A la partie inférieure du tube 2 on distingue l'embout et sa partie conique 7a. Au-dessous de celui-ci est représenté un joint à lèvre 18 et la cage d'entraînement 11 solidaire de l'arbre 5 par l'intermédiaire du prolongateur 6.

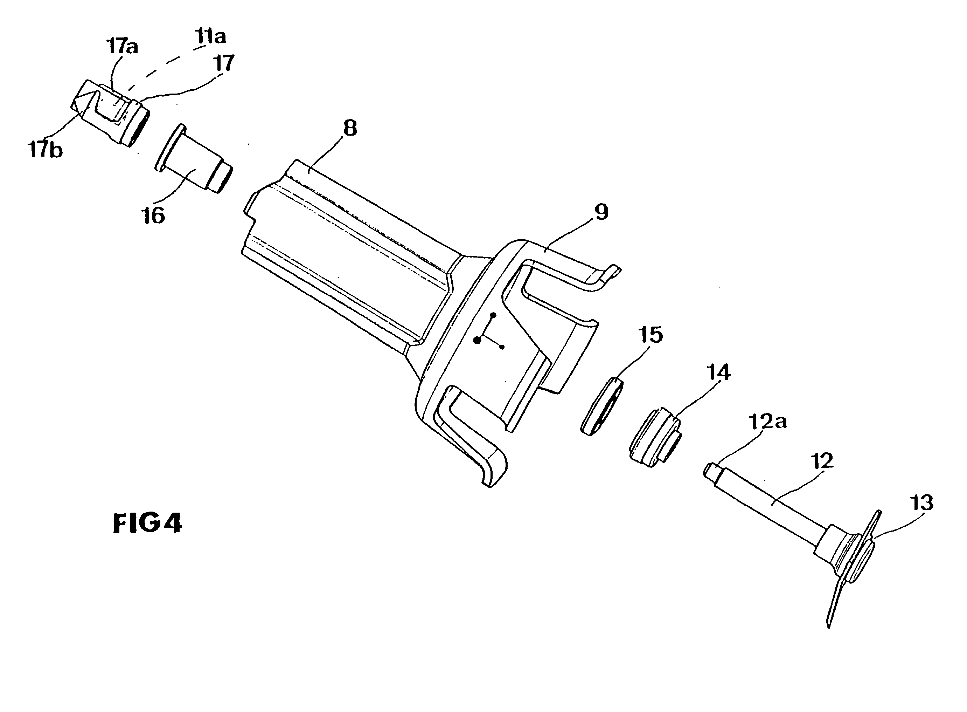

De même, sur la figure 4 on distingue de haut en bas, le moyeu d'entraînement 17, le palier cylindrique 16, par exemple en graphite, le manchon 8 se terminant par la cloche 9, une pièce d'étanchéité 15 à faible coefficient de friction, sur laquelle vient prendre appui, après montage un soufflet élastique 14. A l'intérieur de cet ensemble est monté l'ensemble axe 12,12a de l'outil 13.

Ces éléments se retrouvent, assemblés, sur la figure 2. A l'intérieur de la cage d'entraînement 11 est montée, par l'intermédiaire du moyeu 17, l'extrémité 12a de diamètre réduit de l'axe 12 dont la seconde extrémité porte l'outil 13. qui, dans l'exemple représenté, comporte trois lames. Une première étanchéité est assurée par le soufflet 14, par exemple en néoprène, dont un côté prend appui sur une surface de la pièce 15 qui est, par exemple en céramique. Grâce à l'élasticité du soufflet 14, l'outil a la possibilité de se déplacer axialement de quelques dixièmes de millimètre comme cela sera expliqué ci-après.

L'axe 12 est ensuite tourillonné dans le palier cylindrique 16. Le moyeu d'entraînement 17 est solidaire par vissage de la partie arrière de l'axe 12 et est entouré par la cage d'entraînement 11 solidaire de l'embout 6. Cet embout rotatif est lui-même protégé contre les remontées de liquide par le joint à lèvre 18 et il tourne dans le roulement à billes 30.

En tournant dans la préparation alimentaire, l'outil 13 exerce un effet de pompage centrifuge qui a tendance à aspirer le liquide à l'intérieur du tube 2 avec les inconvénients signalés plus haut. Dans l'appareil objet de l'invention ce problème est résolu par la présence de moyens permettant d'accroître l'étanchéité, d'une part et par la présence d'une chambre de décompression 19 de volume approprié, d'autre part, formée à l'intérieur de l'embout autour des organes d'entraînement de l'outil.

L'étanchéité est améliorée en permettant un léger débattement axial de l'outil qui, comme il a été dit presse lorsqu'il est en rotation sur le soufflet 14. A cet effet, et comme cela apparaît en haut de la figure 4, le moyeu d'entraînement 17 présente des nervures 17a tandis que la cage 11 présente des parties internes en saillie 11a (Fig.3). Les saillies 11a qui viennent porter sur les nervures 17a, se déplacent sur une surface de came 17b du moyeu 17 de manière à attirer l'axe 12 et l'outil vers prolongateur 6, ce qui produit la compression désirée du joint à soufflet 14 dès que le moteur est mis en marche.

On retrouve sur la figure 3 des éléments qui viennent d'être décrits et notamment l'embout 7, présentant une rainure 22 de fermeture à bayonnette.

La partie inférieure de la figure 3 fait clairement apparaître que l'outil monté à l'intérieur de l'embout 1 peut être aisément démonté, par une rotation de l'axe 12 de l'outil qui dégage les saillies 11a de la surface de came 17b, puis en faisant tourner la manchon 8 de manière à ce que les ergots 21 du manchon arrivent en face des entrées des rainures 22

Le démontage de l'embout s'effectue ainsi très rapidement en faisant tourner celui-ci d'un quart de tour ce qui dégage les dents 21 de la rainure 22. après quoi une traction est effectuée sur l'embout 1 ce qui désolidarise la pièce 11 de la pièce 17 et dégage la pièce 8 du cône 7a. Le démontage de l'outil peut alors être effectué en faisant tourner la pièce 17 dans le sens antihoraire ce qui dévisse la partie filetée 12a.

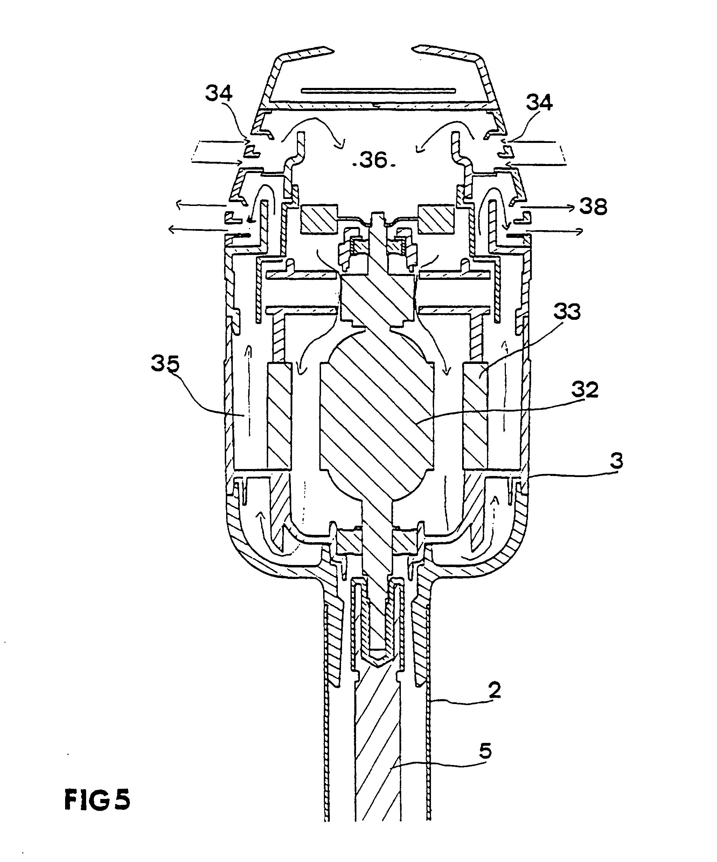

La figure 5 représente la partie haute du mixer. Comme indiqué précédemment, il est souhaitable que celle-ci remplisse les conditions d'étanchéité aussi haut que possible. C'est à dire que le carter 3 doit être parfaitement étanche à sa partie inférieure pour éviter toutes projections dans le moteur. Or, il existe des projections en raison du mouvement rotatif de l'outil. Aussi, selon une autre caractéristique de l'invention, l'entrée et la sortie de l'air de refroidissement du moteur se font par des ouïes 34, 38 situées à la partie supérieure du carter 3. Le circulation de l'air dans le moteur est représentée par des flèches (non référencées). Les ouïes d'entrées 34 correspondent avec une chambre 36 se trouvant au-dessus du moteur lorsque celui-ci est en position de travail, l'outil étant tourné vers le bas. L'air circule, de haut en bas, entre le rotor 32 et les armatures 33. Après quoi, il remonte par la chambre cylindrique 35 pour s'évacuer par les ouïes 38.

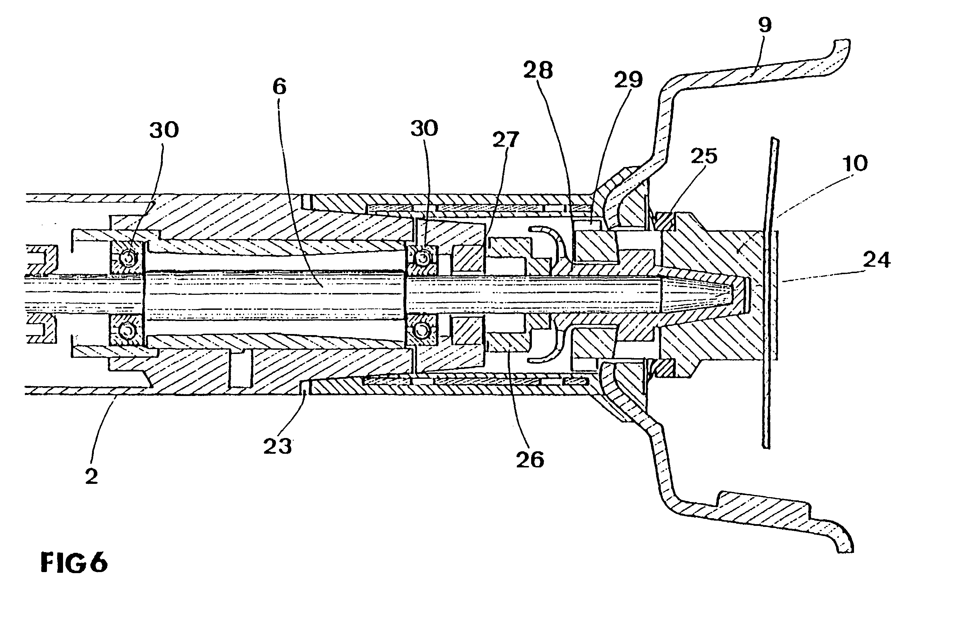

La figure 6 représente une variante du montage de l'outil et de l'embout démontable qui viennent d'être décrits. Dans ce mode de réalisation, la cage d'entraînement 10 est prisonnière dans l'embout cloche 9 par l'intermédiaire de la collerette 29 avec un jeu qui lui confère deux degrés de liberté, respectivement axialement et transversalement. Le moyeu 28 solidaire de l'arbre d'entraînement 6 se termine dans sa partie avant ( à droite de la figure 5), par un cône de centrage 24 de la cage d'entraînement 10. Un joint à lèvre 25 est monté entre la cage d'entraînement 10 et la surface inférieure de l'embout 1. Le moyeu et la cage présentent un système de rampe qui permet de tirer la cage d'entraînement 11 contre le moyeu 28 de manière à écraser le joint à lèvre 25 et assurer ainsi une première étanchéité. Une seconde étanchéité est obtenue par la garniture 26 qui tourne lors de l'entraînement de l'outil contre la face d'une pièce 27, par exemple en céramique. L'arbre d'entraînement 6 tourne à l'intérieur de l'embout par l'intermédiaire de deux roulements à billes 30. Il est solidarisé de l'arbre moteur comme précédemment. Cette solution permet, après utilisation de l'appareil de démonter l'embout et l'outil à des fins de nettoyage.

L'embout amovible 8, relié mécaniquement au tube 2 et incluant des moyens de transmission du mouvement, permet un habillage des pièces métalliques de manière à présenter une surface exempte de zones de rétention des aliments.

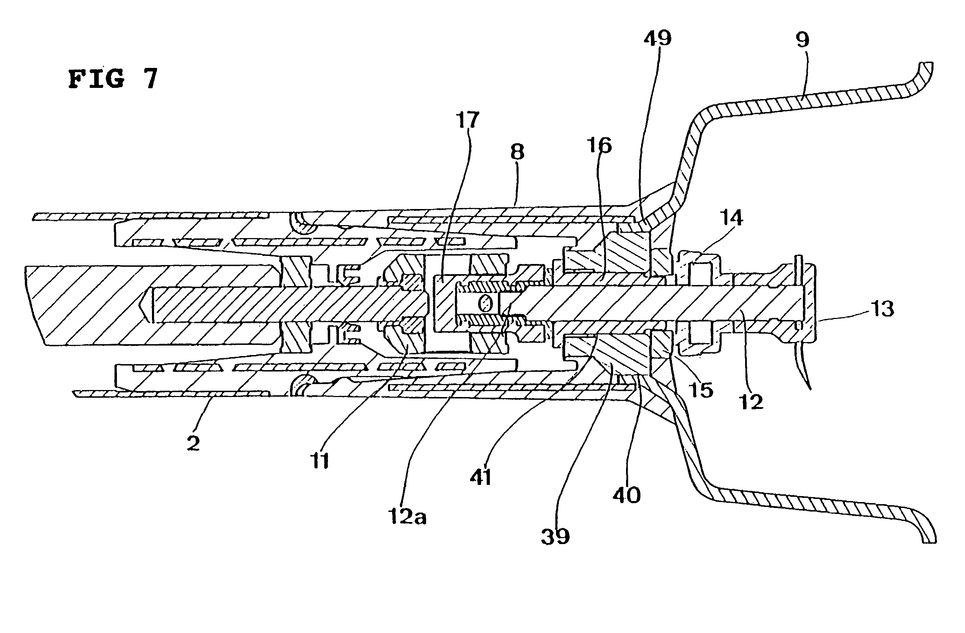

Sur la figure 7, l'axe 12 de l'outil tourne dans un palier cylindrique 16. Une extrémité de l'axe 12 porte l'outil 13 qui, dans l'exemple représenté est un couteau à trois lames. La seconde extrémité 12a de l'axe 12 est montée à l'intérieur de la cage d'entraînement 11 par l'intermédiaire d'un moyeu d'entraînement 17. Une étanchéité est assurée, à partir de l'outil 13, par le soufflet 14, par exemple en néoprène, dont un côté prend appui sur une surface de la pièce 15 à faible coefficient de frottement, qui est, par exemple en graphite.

Lors du fonctionnement de l'appareil, la rotation de l'axe 12 dans le palier 16 engendre une élévation en température qui ne peut pas être dissipée lorsque le palier 16 est noyé dans le plastique et donc isolé de la cloche 9. d'où un risque de détérioration de l'appareil.

Selon l'invention, on insère entre le palier 16 et la cloche 9 une bague 39 conductrice de la chaleur, par exemple en acier inoxydable, de forme générale tronconique dont la surface externe 40 est en contact avec la partie supérieure 49 de la cloche 9 et dont l'orifice interne 41 enserre le palier 16 sur la plus grande partie de sa longueur.

Cette bague 39 crée un pont thermique entre le palier 16 et la cloche 9 ce qui permet la dissipation de chaleur vers l'extérieur de l'appareil.

## Revendications

1. Mixer plongeant comprenant un carter (3), le carter (3) incluant un moteur électrique entraînant en rotation une première extrémité d'un arbre (5) inclus dans un tube fixe (2) fixe sur le carter (3) par une première extrémité, un outil (13) étant lié en rotation à la seconde extrémité de l'arbre (5) par un axe (12), un embout (1) amovible étant monté sur une seconde extrémité du tube (2), l'axe (12) traversent l'embout (1) et étant lié de façon amovible à l'arbre (5), **caracterisé en ce que** l'outil (13) et l'axe (12) sont montés de manière amovible dans l'embout (1).

2. Mixer selon la revendication 1, **caractérisé en ce que** l'arbre moteur (5) inclût un prolongateur (6) entraînant une cage d'entraînement (11) solidaire du prolongateur (6), coopérant avec un moyeu d'entraînement (17) solidaire de l'axe (12) de l'outil (13).

3. Mixer selon la revendication 2, **caractérisé en ce que** la cage (11) comporte des saillies internes (11a) s'insérant dans le moyeu (17) et portant sur des surfaces de came (17b) pour attirer l'axe (12) et l'outil vers le prolongateur (6).

4. Mixer selon l'une quelconque des revendications 2 ou 3, **caractérisé en ce que** le prolongateur (6) est monté rotatif par l'intermédiaire d'un palier (30) et étanchéifié par un joint à lèvre (18).

5. Mixer selon l'une des revendications précédentes, **caractérisé en ce que**, à la sortie de l'embout (1), et solidarisé de l'axe (12) de l'outil est monté un joint à soufflet rotatif (14) susceptible de s'écraser pour porter contre une pièce annulaire (15), à faible coefficient de friction, fixée sur l'embout, suivi par une chambre de décompression (19) de volume approprié.

6. Mixer selon l'une quelconque des revendications précédentes, **caractérisé en ce qu'**une bague (39) conductrice de la chaleur est montée entre un palier (16) de guidage de l'axe (12) et la cloche (9).

7. Mixer plongeant comprenant un carter (3), le carter (3) incluant un moteur électrique entraînant en rotation une première extrémité d'un arbre (5) inclus dans un tube fixe (2) fixé sur le carter (3) par une première extrémité, un outil étant lié en rotation de façon amovible à la seconde extrémité de l'arbre (5), un embout (1) étant monté de façon amovible sur une seconde extrémité du tube (2), l'embout (1) et l'outil étant démontable, **caractérisé en ce que** l'outil est démontable de l'embout (1).

8. Mixer selon la revendication 7, **caractérisé en ce que** l'arbre (5) entraîne en rotation une cage d'entraînement (10) sur laquelle est monté l'outil, la cage d'entraînement (10) étant prisonnière dans l'embout cloche (9) par l'intermédiaire d'une collerette (29) avec un jeu qui lui confère deux degrés de liberté, respectivement axialement et transversalement.

9. Mixer selon l'une quelconque des revendications précédentes, **caractérisé en ce que** le carter (3) est pourvu, à son extrémité supérieure, d'ouïes (34) d'entrée et (38) de sortie d'air, la partie inférieure du carter (3) étant étanche.

10. Mixer plongeant selon l'une quelconque des revendications précédentes, **caractérisé en ce que** la partie inférieure du tube (2) présente une pièce d'assemblage (7) surmontée par une rainure (22) dans laquelle s'engagent des dents (21) de la pièce de raccordement (8) de l'embout (1), un joint statique étant interposé entre les pièces (7) et (8).

## Patentansprüche

1. Stabmixer, aufweisend ein Gehäuse (3), wobei das Gehäuse (3) einen Elektromotor einschließt, der ein erstes Ende einer Welle (5) rotierend antreibt, die in einem festen Rohr (2) eingeschlossen ist, das am Gehäuse (3) an einem ersten Ende befestigt ist, ein Werkzeug (13), das mit dem zweiten Ende der Welle (5) durch einen Zapfen (12) rotierend verbunden ist, ein lösbares Ansatzstück (1), das an einem zweiten Ende des Rohrs (2) angebracht ist, wobei der Zapfen (12) das Ansatzstück (1) durchquert und mit der Welle (5) lösbar verbunden ist, **dadurch gekennzeichnet, dass** das Werkzeug (13) und der Zapfen (12) lösbar im Ansatzstück (1) angebracht sind.

2. Mixer nach Anspruch 1, **dadurch gekennzeichnet, dass** die Motorwelle (5) eine Verlängerung (6) einschließt, die einen mit der Verlängerung (6) verbundenen Antriebskäfig (11) antreibt, der mit einer mit dem Zapfen (12) des Werkzeugs (13) verbundenen Antriebsnabe (17) zusammenwirkt.

3. Mixer nach Anspruch 2, **dadurch gekennzeichnet, dass** der Käfig (11) interne Vorsprünge (11a) umfasst, die in die Antriebsnabe (17) einrasten und sich auf die Nockenoberflächen (17b) erstrecken, um den Zapfen (12) und das Werkzeug in Richtung Verlängerung (6) anzuziehen.

4. Mixer nach einem der Ansprüche 2 oder 3, **dadurch gekennzeichnet, dass** die Verlängerung (6) über ein Lager (30) rotierend angebracht ist und von einer Lippendichtung (18) abgedichtet wird.

5. Mixer nach einem der vorhergehenden Ansprüche, **dadurch gekennzeichnet, dass** am Ausgang des Ansatzstücks (1) und mit dem Zapfen (12) des Werkzeugs verbunden eine rotierende Balgdichtung (14) angebracht ist, die zusammengedrückt wird, um gegen einen auf dem Ansatzstück befestigten Ring (15) mit einem geringen Reibungswert zu wirken, gefolgt von einer Dekompressionskammer (19) mit einem entsprechenden Volumen.

6. Mixer nach einem der vorhergehenden Ansprüche, **dadurch gekennzeichnet, dass** zwischen einem Führungslager (16) des Zapfens (12) und der Glocke (9) ein Wärmeleitring (39) angebracht ist.

7. Stabmixer, äufweisend ein Gehäuse (3), wobei das Gehäuse (3) einen Elektromotor einschließt, der ein erstes Ende einer Welle (5) rotierend antreibt, die in einem festen Rohr (2) eingeschlossen ist, das am Gehäuse (3) an einem ersten Ende befestigt ist, ein Werkzeug, das mit dem zweiten Ende der Welle (5) durch einen Zapfen (12) rotierend und lösbar verbunden ist, ein Ansatzstück (1), das an einem zweiten Ende des Rohrs (2) lösbar angebracht ist, wobei das Ansatzstück (1) und das Werkzeug demontierbar sind, **dadurch gekennzeichnet, dass** das Werkzeug vom Ansatzstück (1) demontiert werden kann.

8. Mixer nach Anspruch 7, **dadurch gekennzeichnet, dass** die Welle (5) einen Antriebskäfig (10) rotierend antreibt, auf dem das Werkzeug angebracht ist, wobei der Antriebskäfig (10) im Glockenansatz (9) über einen Flansch (29) mit einem Spiel gefangen ist, das ihm zwei Freiheitsgrade axial bzw. transversal gewährt.

9. Mixer nach einem der vorhergehenden Ansprüche, **dadurch gekennzeichnet, dass** das Gehäuse (3) an seinem oberen Ende Lufteingangs- (34) und Luftausgangsöffnungen (38) hat, wobei der untere Teil des Gehäuses (3) dicht ist.

10. Stabmixer nach einem der vorhergehenden Ansprüche, **dadurch gekennzeichnet, dass** der untere Teil des Rohrs (2) ein Anschlussstück (7) aufweist, das von einer Rille (22) überragt wird, in welche die Zähne (21) des Verbindungsstücks (8) des Ansatzstücks (1) einrasten, wobei zwischen den Teilen (7) und (8) eine statische Dichtung eingefügt ist.

## Claims

1. Dipping mixer comprising a housing (3), housing (3) including an electric motor driving in rotation a first end of a shaft (5) included in a fixed tube (2) attached to housing (3) by a first end, an implement (13) being joined in rotation to the second end of shaft (5) via a spindle (12), a removable end-piece (1) being mounted on a second end of tube (2), spindle (12) passing through end-piece (1) and being connected removable fashion to shaft (5), **characterized in that** implement (13) and spindle (12) are mounted removable fashion in end-piece (1).

2. Mixer as in claim 1, **characterized in that** the motor shaft (5) includes an extension (6) driving a driver cage (11) integral with extension (6), cooperating with a driver hub (17) integral with spindle (12) of implement (13).

3. Mixer as in claim 2, **characterized in that** cage (11) includes inner projections (11a) inserting into hub (17) falling on cam surfaces (17b) to draw spindle (12) and the implement towards extension (6).

4. Mixer as in either of claims 2 or 3, **characterized in that** the extension (6) is mounted in rotation via a bearing (30) and sealed by a lip seal (18).

5. Mixer as in any of the preceding claims, **characterized in that**, at the exit of end-piece (1), and integral with spindle (12) of the implement, a rotary bellows seal is mounted (14) able to be crushed against a ring part (15) with low coefficient of friction fixed to the end-piece, followed by a decompression chamber (19) of appropriate volume.

6. Mixer as in any of the preceding claims, **characterised in that** a heat conducting ring (39) is mounted between a guide bearing (16) for spindle (12) and a bell guard (9).

7. Dipping mixer comprising a housing (3), housing (3) including an electric motor driving in rotation a first end of a shaft (5) included in a fixed tube (2) attached to housing (3) by a first end, an implement being connected in rotation removable fashion to the second end of shaft (5), an end-piece (1) being mounted removable fashion onto a second end of tube (2), end-piece (1) and the implement being removable, **characterized in that** the implement can be dismounted from the end-piece (1).

8. Mixer as in claim 7, **characterized in that** shaft (5) drives in rotation a driver cage (10) on which the implement is mounted, the driver cage (10) being trapped in the bell guard (9) via a collar (29) with clearance imparting two degrees of freedom respectively axially and transversally.

9. Mixer as in any of the preceding claims **characterized in that** housing (3) at its upper end is provided with air inlets (34) and outlets (38), the lower part of the housing (3) being sealed.

10. Dipping mixer as in any of the preceding claims **characterized in that** the lower part of tube (2) has an assembly part (7) surmounted by a groove (22) into which engage teeth (21) of connector part (8) of end-piece (1), a static seal being inserted between parts (7) and (8).
